# EUROPÄISCHE PATENTSCHRIFT

(11) **EP 3 308 125 B1**
(45) Veröffentlichungstag und Bekanntmachung des Hinweises auf die Patenterteilung: **17.03.2021**
(21) Anmeldenummer: 16731524.1
(22) Anmeldetag: 02.06.2016
(51) Int. Cl.: G01M 7/08, G01N 3/303

(54) **VORRICHTUNG UND VERFAHREN ZUM BESTIMMEN DER LAGERUNGSDICHTE VON UNGEBUNDENEM FUGENMATERIAL**
DEVICE AND METHOD FOR DETERMINING THE DEGREE OF COMPACTION OF NON-BONDED JOINING MATERIAL
DISPOSITIF ET PROCÉDÉ POUR DÉTERMINER LA COMPACITÉ D'UN MATÉRIAU DE JOINT NON LIÉ

(30) Priorität: 09.06.2015 DE 102015109109
(43) Veröffentlichungstag der Anmeldung: 18.04.2018
(73) Patentinhaber: Metzing, Andreas Heiko, 38302 Wolfenbüttel (DE)
(72) Erfinder: Metzing, Andreas Heiko, 38302 Wolfenbüttel (DE)
(74) Vertreter: Gramm, Lins & Partner Patent- und Rechtsanwälte PartGmbB
(86) Internationale Anmeldenummer: PCT/EP2016/062505
(87) Internationale Veröffentlichungsnummer: WO 2016/198310

(56) Entgegenhaltungen:
- DD-A1- 252 886
- GB-A- 248 888
- US-A1- 2007 131 025
- US-A1- 2014 026 635

## Beschreibung

Die Erfindung betrifft ein Verfahren zum Bestimmen der Lagerungsdichte von ungebundenen Fugen.

Aus der US 2007/0131025 A1 sind eine Vorrichtung und ein Verfahren zum Bestimmen der Bodenverdichtung insbesondere am Grund von Baugruben bekannt. Dazu wird ein Penetrometer mit einem Amboss verwendet, auf den ein Gewicht solange fallengelassen wird, bis das Penetrometer eine bestimmte Eindringtiefe in den Boden erreicht hat. Die Anzahl der notwendigen Wiederholungen wird dann als Maß für die Bodenverdichtung verwendet.

Aus der GB 248 888 A ist ein Verfahren zum Bestimmen der Festigkeit von Papier, Stoffen und anderen flächigen Materialien mittels eines Penetrometers bekannt.

Aus der US 2014/0026635 A1 sind eine Vorrichtung und ein Verfahren zum Bestimmen des Elastizitätsmoduls von Asphalt bekannt, wobei ein Stempel den Asphalt mit einer definierten Kraft komprimiert und die vom Stempel dabei zurückgelegte Strecke gemessen wird.

Aus der DD 252 886 A1 sind eine Vorrichtung und ein Verfahren zur Bestimmung der Festigkeit von Massivbaustoffen, beispielweise Fugenmörtel, bekannt.

Eine Vielzahl von Außenflächen, beispielsweise Gehweg-, Parkplatz-, Straßen- oder Terrassenflächen werden heute mit ungebundenen Pflasterdecken und Plattenbelägen ausgeführt. Dabei entstehen Fugen zwischen den einzelnen Pflastersteinen oder verlegten Platten, die mit ungebundenem Fugenmaterial in unterschiedlichsten Formen gefüllt werden müssen. Dazu wird das jeweils verwendete Fugenmaterial beispielsweise in die Fugen eingefegt. Die Art des jeweils verwendeten Fugenmaterials und beispielsweise seine Körnungsgröße können dabei von Fläche zu Fläche variieren. Die verlegten Pflastersteine oder Platten werden in der Regel in eine Bettung verlegt oder versetzt, die aus einem Bettungsmaterial besteht, das ebenfalls ungebunden ausgebildet sein kann. Auch hier können sich Art, Material und beispielsweise Korngröße für unterschiedliche Flächen stark unterscheiden.

Für die Qualität und Haltbarkeit des so hergestellten Belages ist insbesondere die Lagerungsdichte des Fugenmaterials und des Bettungsmaterials ausschlaggebend. Die einzelnen Pflastersteine oder verlegten Platten, die den Belag bilden, werden in der Regel auf einer ungebundenen Bettung verlegt. Diese weist in der Regel Hohlräume auf. Bei ungebundenen Fugen kann es dazu kommen, dass bei nicht ausreichender Lagerungsdichte des Fugenmaterials Feinanteile leichter aus dem Fugenmaterial unter dynamischer Belastung, wie sie beispielsweise durch die Belastung durch einen Straßenverkehr auftreten kann, in bestehende Hohlräume der jeweiligen Bettung wandern. Dadurch können die Hohlräume in der Bettung verschlossen werden, so dass die Filterstabilität bis hin zur vollständigen Verhinderung der Wasserdurchlässigkeit des Bettungsmaterials aufgehoben werden kann. Zudem kann es unabhängig von den Hohlräumen der Bettung zu einem Nachsacken des Fugenmaterials auch bei nicht ausreichender Lagerungsdichte des Fugenmaterials an sich, Hohlräumen im Fugenquerschnitt und somit aufgrund nicht vollständig gefüllter Fugen und einem erhöhten Wassereintrag zu klappernden Pflastersteinen oder Platten kommen. Dieser Sachverhalt kann auch verstärkt werden, wenn Fugenmaterial nicht ausreichender Lagerungsdichte durch die sogenannte Pump- und Sogwirkung von Reifen, den Einsatz von Reinigungsgeräten oder durch das Ausspülen durch Oberflächenwasser aus den Fugen entfernt wird. In den so nachgesackten oder zumindest teilweise geleerten Fugen sammelt sich das Wasser, das bei dynamischer Belastung aus den Fugen herausspritzt und so zum nahezu vollständigen Versagen der Tragfähigkeit der jeweiligen Pflasterfläche oder des Plattenbelages führt. Bei insbesondere dem öffentlichen Straßenverkehr zugänglichen Flächen, wie beispielsweise Straßenbelägen, ist in diesem Fall die Verkehrssicherheit nicht mehr gegeben und die Unfallgefahr steigt.

Bis heute gibt es nahezu keine Möglichkeit, die Qualität der Verlegung eines Pflasters oder eines anderen mit ungebundenen Fugen versehenen Bodenbelages zu erfassen. Der Bauherr hat folglich beispielsweise bis zur Bauabnahme keine Möglichkeit, eventuell vorhandene Baumängel bei der Verlegung des Pflaster- oder Plattenmaterials zu beanstanden.

Der Erfindung liegt daher die Aufgabe zugrunde, ein Verfahren anzugeben, mit dem die Lagerungsdichte von Fugensanden eines Bodenbelages bestimmt werden kann.

Die Erfindung löst die gestellte Aufgabe durch ein Verfahren zum Bestimmen der Lagerungsdichte von ungebundenen Fugenmaterialien eines Bodenbelages, bei dem eine Vorrichtung zum Bestimmen der Lagerungsdichte von ungebundenen Fugenmaterialien eines Bodenbelages, wobei die Vorrichtung ein Eindringelement zum Eindringen in das Fugenmaterials, eine Kraftaufbringeinrichtung und eine Messeinrichtung aufweist, wobei die Kraftaufbringeinrichtung derart ausgebildet ist, dass ein Kraftstoß mit vorbestimmter Kraft in einer vorbestimmten Richtung auf das Eindringelement ausübbar ist und wobei die Messeinrichtung eingerichtet ist zum Messen einer Strecke, um die sich das Eindringelement durch einen Kraftstoß bewegt hat, der auf das Eindringelement mittels der Kraftaufbringeinrichtung aufgebracht wurde zum Einsatz kommt, wobei das Verfahren die folgenden Schritte aufweist:
a) Positionieren der Vorrichtung über einer Fuge des Bodenbelages, in der die Lagerungsdichte des in der Fuge enthaltenen Fugenmaterials bestimmt werden soll,
b) Aufsetzen des Eindringelementes auf die Fuge,
c) Ausüben mehrerer Kraftstöße auf das Eindringelement mittels der Kraftaufbringeinrichtung und
d) Bestimmen der Strecke, um die sich das Eindringelement aufgrund jedes der Kraftstöße bewegt hat, mittels der Messeinrichtung.

Durch das erfindungsgemäße Verfahren wird gewährleistet, dass auf das Eindringelement eine definierte Kraft aufgebracht werden kann. Da das Eindringelement auf die jeweilige Fuge aufgesetzt wird, in der die Lagerungsdichte des Fugenmaterials und / oder des Bettungsmaterials bestimmt werden soll, wird das Eindringelement durch den Kraftstoß, der durch die Kraftaufbringeinrichtung ausübbar ist, in die Fuge eingetrieben. Die Strecke, um die sich das Eindringelement bewegt und in die Fuge und eindringt, hängt dabei vom ungebundenen Material, von der Lagerungsdichte und der aufgebrachten Kraft ab. Da die aufgebrachte Kraft wohldefiniert und somit bekannt ist, kann aus der Strecke, um die sich das Eindringelement bewegt hat und die einer Eindringtiefe entspricht, direkt auf die Lagerungsdichte des Fugensandes zurückgeschlossen werden.

Vorteilhafterweise ist das Eindringelement dabei austauschbar ausgebildet. So kann es beispielsweise durch eine Schraubverbindung mit einem der Elemente oder der Bauteile der Vorrichtung verbunden sein. Für unterschiedliche Bodenbeläge und unterschiedliche Fugenbreiten können unterschiedliche Eindringelemente nötig oder von Vorteil sein. Die unterschiedlichen Eindringelemente unterscheiden sich beispielsweise durch einen Durchmesser im Bereich einer Spitze des Eindringelementes sowie durch die geometrische Form an der Spitze. Die Eindringelemente können an der Spitze beispielsweise eine ebene Fläche, eine Rundung oder eine Spitze aufweisen. Auch von dieser geometrischen Form und dem Durchmesser des Eindringelementes hängt naturgemäß die Eindringtiefe und damit die Strecke ab, um die sich das Eindringelement durch den Kraftstoß bewegt hat. Dennoch lässt sich für ein bekanntes Eindringelement aus der Eindringtiefe direkt auf die Lagerungsdichte schließen.

Durch die Vorrichtung und das damit durchzuführende erfindungsgemäße Verfahren lässt sich auf besonders einfache Weise die Lagerungsdichte von ungebundenen Fugenmaterialien und damit die Qualität des hergestellten Bodenbelages bestimmen, so dass auch diese Qualität nun festgestellt, begutachtet und gegebenenfalls beanstandet werden kann.

Vorteilhafterweise verfügt die Messeinrichtung über eine Anzeigeeinrichtung, die insbesondere eine Skala und/oder ein Display sein kann. In einer konstruktiv besonders einfachen Ausgestaltung verfügt die Messeinrichtung über eine Skala, relativ zu der sich das Eindringelement bewegen kann. Über eine beispielsweise mechanische Zeigereinrichtung kann anhand der Skala abgelesen werden, wie weit sich das Eindringelement durch den Kraftstoß bewegt hat. Diese Ausgestaltung ist konstruktiv einfach, führt bei der Durchführung des Verfahrens mit einer derartigen Vorrichtung jedoch zu gegebenenfalls ungenaueren Ergebnissen, da eine Ableseungenauigkeit einbezogen werden muss. Insbesondere bei schwierig zugänglichem Gelände kann dies durchaus ein die Genauigkeit limitierender Faktor sein.

Diese Ableseungenauigkeit kann vermieden werden, wenn die Vorrichtung stattdessen ein elektronisches Display aufweist, auf dem beispielsweise die zurückgelegte Strecke, um die sich das Eindringelement durch den Kraftstoß bewegt hat, angezeigt werden kann.

In einer bevorzugten Ausgestaltung ist die Messeinrichtung eine elektronische Messeinrichtung zum Messen der Strecke. Das Ergebnis dieser Messung kann dann auf einem elektronischen Display, beispielsweise einem LCD-Display angezeigt und / oder vorzugsweise direkt in ein elektronisches Datenverarbeitungsgerät übertragen werden.

Als besonders vorteilhaft hat sich herausgestellt, wenn das Eindringelement an einem Kraftübertragungselement angeordnet ist, auf das durch die Kraftaufbringeinrichtung der Kraftstoß ausübbar ist und das relativ zu der Messeinrichtung bewegbar ist. Dieses Kraftübertragungselement kann beispielsweise in Form einer Stange ausgebildet sein. An einem Ende dieser Stange, das im Betrieb der Vorrichtung nach unten zeigt, befindet sich das Eindringelement, das beispielsweise als eine an dem Ende des Kraftübertragungselementes anschraubbare Spitze ausgebildet ist. Natürlich sind auch andere Möglichkeiten der lösbaren Befestigung möglich. Die Kraftaufbringeinrichtung kann den Kraftstoß auf das Kraftübertragungselement ausüben, das ihn auf das Eindringelement überträgt.

Vorzugsweise ist das Kraftübertragungselement in einer Führung gelagert und relativ zu dieser Führung festlegbar. Die Führung kann beispielsweise in Form eines Führungsrohres vorliegen, in dem das Kraftübertragungselement, das beispielsweise als Stange ausgebildet ist, geführt wird. Die Festlegbarkeit ist insbesondere beim Transport der Vorrichtung von Vorteil, damit das gegebenenfalls empfindliche Eindringelement vor Beschädigungen geschützt ist. Das Kraftübertragungselement kann dabei vorzugsweise so weit in die Führung verschoben werden, dass das Eindringelement von der Führung umgeben und somit geschützt wird. In einer besonders einfachen Ausgestaltung der Vorrichtung ist an der Führung oder einem anderen Teil der Vorrichtung, relativ zu dem das Eindringelement bewegbar ausgebildet ist, eine elektronische Messeinrichtung angeordnet, die beispielsweise einen Laser aufweist. Der von diesem Laser ausstrahlbare Laserstrahl verläuft bevorzugt parallel zum Kraftübertragungselement. An einer von dem Laser der Messeinrichtung beabstandeten Stelle beispielsweise am Kraftübertragungselement ist ein Referenzelement angeordnet, das beispielsweise als Platte ausgebildet sein kann. Der Laser ist nun so angeordnet, dass die von ihm aussendbare Laserstrahlung auf eine Oberseite oder eine Unterseite dieses Referenzelementes trifft. Auf diese Weise ist es möglich, den Abstand zwischen dem Laser und dem Referenzelement zu bestimmen. Da das Referenzelement an dem Kraftübertragungselement angeordnet ist, das sich mit dem Eindringelement bewegt, sobald ein Kraftstoß auf das Eindringelement beziehungsweise das Kraftübertragungselement ausgeübt wird, verändert sich beim Bewegen des Eindringelementes auch die Position des Referenzelementes relativ zum Laser. Dadurch wird die Messeinrichtung einen nun veränderten Abstand wahrnehmen, der je nach Positionierung und Anordnung der verwendeten Bauteile größer oder kleiner geworden sein kann. Die Differenz dieser beiden Abstände vor und nach dem jeweiligen Kraftstoß entspricht der Strecke, um die sich das Referenzelement und damit auch das Eindringelement relativ zum Laser bewegt hat. Auf diese Weise lässt sich der gewünschte Abstand in technisch einfacher Weise sehr exakt bestimmen.

Vorteilhafterweise verfügt die Kraftaufbringeinrichtung über wenigstens ein Gewichtselement, das entlang einer Führung bis zu einem Anschlag verschiebbar ist. Die Führung kann dabei beispielsweise ein dem Eindringelement gegenüber liegendes Ende des Kraftübertragungselementes, beispielsweise einer Stange, sein. Zum Ausüben des Kraftstoßes auf das Eindringelement gemäß dem erfindungsgemäßen Verfahren wird bei dieser Ausgestaltung der Kraftaufbringeinrichtung das Gewichtselement entlang der Führung bis zum Anschlag verschoben und anschließend losgelassen. Es folgt der Schwerkraft nach unten und trifft auf einen Teil des Eindringelementes oder des Kraftübertragungselementes, beispielsweise des Referenzelementes, das auch für die Abstandsmessung verwendet wird. Das Gewichtselement kann auf unterschiedliche Weise angehoben und losgelassen werden. Dies kann manuell oder automatisch geschehen. Sofern die Masse und die Strecke bekannt ist, um die das Gewichtselement bis zum Anschlag verschoben wird und um die es der Gewichtskraft folgend bewegt wird, kann die aufgebrachte Kraft und der Kraftstoß auf sehr einfache Weise bestimmt werden. Vorteilhafterweise ist dabei das Gewichtselement austauschbar, um beispielsweise unterschiedlich starke Kraftstöße auf das Eindringelement oder ein Kraftübertragungselement aufbringen zu können. Alternativ oder zusätzlich dazu kann auch der Anschlag verschiebbar ausgebildet sein. Er kann beispielsweise als Bauteil ausgebildet sein, dass über eine Durchgangsbohrung verfügt, in die ein Teil des Kraftübertragungselementes eingebracht und hindurchgeführt werden kann. Das Anschlagselement verfügt dann beispielsweise über eine Klemmeinrichtung, beispielsweise eine Klemmschraube, durch die das Anschlagselement an dem Kraftübertragungselement angeordnet und positioniert werden kann. Über eine beispielsweise auf dem Kraftübertragungselement angeordnete Skala lässt sich die exakte Position des Anschlages relativ zu dem Teil des Kraftübertragungselementes oder des Eindringelementes, auf das der Kraftstoß ausgeübt werden soll, bestimmen.

Bei der Durchführung des Verfahrens ist es durchaus von Vorteil, mehrere Kraftstöße auf das Eindringelement oder das Kraftübertragungselement aufzubringen und beispielsweise nach jedem der Kraftstöße die gemessene Strecke zu bestimmen. Auf diese Weise lässt sich beispielsweise die Lagerungsdichte des ungebundenen Fugenmaterials in unterschiedlichen Tiefen der Fuge bestimmen. Diese mehreren Kraftstöße können identisch oder unterschiedlich ausgebildet sein, indem beispielsweise verschiedene Anschlagshöhen und damit verschiedene Fallhöhen für ein Gewichtselement und/oder verschiedene Gewichtselemente verwendet werden.

Um große Kraftstöße auf das Eindringelement oder ein Kraftübertragungselement aufbringen zu können, ist es von Vorteil, wenn das Gewichtselement durch ein Federelement federbelastet ist. Auf diese Weise wird es nicht nur durch die Gewichtskraft auf das Eindringelement oder ein Kraftübertragungselement beschleunigt, sondern gleichzeitig auch durch ein Federelement beschleunigt. Dadurch können bei gleicher Fallhöhe deutlich größere Kraftstöße erzeugt und auf das Eindringelement oder das Kraftübertragungselement übertragen werden.

Zum Verwenden einer derartigen Vorrichtung wird das Gewichtselement gegen die von dem Federelement aufgebrachte Kraft angehoben. Handelt es sich bei dem Federelement beispielsweise um eine Druckfeder, wird diese durch das Anheben des Gewichtselementes, das vorteilhafterweise entlang einer Führung erfolgt, zusammengedrückt. Soll das Gewichtselement den Kraftstoß auf das Eindringelement oder das Kraftübertragungselement aufbringen, kann es vorteilhafterweise einfach losgelassen werden und bewegt sich der Schwerkraft folgend nach unten. Durch das gespannte Federelement wird eine zusätzliche Kraft auf das Gewichtselement ausgeübt, das dadurch beschleunigt wird, wodurch der aufzubringende Kraftstoß vergrößert werden kann.

Vorteilhafterweise verfügt die Vorrichtung über wenigstens drei Stützelemente zum Aufsetzen auf dem Bodenbelag, von denen wenigstens eines, vorteilhafterweise alle, in seiner oder ihrer wirksamen Länge verstellbar ist/sind. Auf diese Weise lässt sich erreichen, dass die Richtung, in der der Kraftstoß durch die Kraftaufbringeinrichtung auf das Eindringelement oder ein Kraftübertragungselement aufgebracht wird und die Richtung, in der sich das Eindringelement durch diesen Kraftstoß bewegt, sich von oben nach unten durch die zu vermessende Fuge erstreckt. Um das erfindungsgemäße Verfahren durchführen zu können ist es notwendig, zu gewährleisten, dass das Eindringelement nicht an einem der Pflastersteine oder Platten anschlägt oder hängen bleibt und so das Ergebnis der Eindringtiefe verfälscht wird. Daher kann es sinnvoll sein, die Richtung und Position des Eindringelementes relativ zur Fuge beispielsweise durch wenigstens eines, bevorzugt alle der wenigstens drei Stützelemente einstellen zu können. In einer besonders einfachen Ausgestaltung verfügt die Vorrichtung über eine Grundplatte, auf der der gesamte Aufbau angeordnet ist, und die über wenigstens drei Füße verfügt, die die wenigstens drei Stützelement bilden. Als vorteilhaft hat sich dabei herausgestellt, wenn in dieser Grundplatte oder an einem anderen Bauteil der Vorrichtung eine Wasserwaage (Libelle) oder eine andere Vorrichtung zur Bestimmung eines Neigungswinkels angeordnet ist, um festzustellen, wann das Eindringelement und die Kraftaufbringeinrichtung so angeordnet sind, dass die aufgebrachte Kraft exakt vertikal, also der Schwerkraft folgend, verläuft. Vorzugsweise sind das Kraftübertragungselement und/oder das Eindringelement relativ zu dieser Grundplatte und/oder relativ zu den wenigstens drei Stützelementen senkrecht zur Längsrichtung und zur Bewegungsrichtung des Eindringelementes und des Kraftübertragungselementes bewegbar ausgebildet. Auf diese Weise kann zunächst die Vorrichtung aufgestellt und beispielsweise in Waage gebracht werden, so dass sich das Kraftübertragungselement und/oder das Eindringelement in einer lotrechten, also der Schwerkraft folgenden, Stellung befindet. Anschließend kann das Kraftübertragungselement und das Eindringelement relativ zu den Stützelementen verschoben werden, um eine Position parallel zum Fußboden so zu verschieben, dass das Eindringelement exakt an der gewünschten Stelle über der zu vermessenden Fuge angeordnet wird. Dies ist möglich, ohne die Position der Stützelemente zu verändern, was gegebenenfalls eine erneute Ausrichtung in die Lotrechte zur Folge hätte.

Vorzugsweise verfügt die Vorrichtung über einen Neigungssensor, um festzustellen, welchen Winkel ein Kraftübertragungselement und/oder ein Eindringelement relativ zur Lotrechten aufweist. Dies ist einerseits bei der Vermessung von Fugen auf geneigten Böden oder Straßenbelägen von Vorteil. Andererseits hat eine Neigung beispielsweise der Kraftaufbringeinrichtung den Effekt, dass die durch die Kraftaufbringeinrichtung auf das Eindringelement übertragene Kraft abnimmt, sofern diese lediglich von der Schwerkraft hervorgerufen wird. Ist es für bestimmte Anwendungen nötig, ein möglichst exaktes Messergebnis der Eindringtiefe und damit der Lagerungsdichte des ungebundenen Fugenmaterials zu erhalten, kann durch einen Lage- oder Neigungssensor der Winkel zwischen der aufgebrachten Kraftrichtung und der Lotrechte bestimmt und in die Berechnung der tatsächlich aufgebrachten Kraft einbezogen werden.

Neben der auf diese Weise durch die Vorrichtung und das erfindungsgemäße Verfahren bestimmbaren Lagerungsdichte durch die Eindringtiefe des Eindringelementes in die zu vermessende Fuge erhält man zusätzlich durch Geräusch und gegebenenfalls Gefühl beim Eindringen des Eindringelementes weiteren Aufschluss über die Dichtigkeit und die Art der durchstoßenen Lagerungsschichten. Befindet sich in der Fuge beispielsweise ein hoher Sandanteil, wird gegebenenfalls ein Knirschen zu vernehmen sein, während hohe bindige Anteile sich als äußerst zäh erweisen können.

Die Vorrichtung verfügt zudem vorteilhafterweise über eine Datenverarbeitungseinrichtung, die insbesondere dann von Vorteil ist, wenn durch die Messeinrichtung die zurückgelegte Strecke elektronisch vermessen und gespeichert wird. Auf diese Weise können unterschiedlichste Auswertungen der aufgenommen Messwerte in der elektronischen Datenverarbeitungseinheit ausgeführt und abgespeichert werden. Über eine Schnittstelle, die kabelgebunden oder kabellos erfolgen kann, können die so gespeicherten und gegebenenfalls bereits verarbeitenden Daten abgerufen und überspielt werden.

Verfügt die Vorrichtung über eine Grundplatte an deren Unterseite die wenigstens drei Stützelemente angeordnet sind, hatte sich als vorteilhaft herausgestellt, wenn diese Grundplatte über Ausnehmungen oder Löcher verfügt, die so angeordnet sind, dass beim Aufstellen der Vorrichtung das Eindringelement insbesondere mit seiner Spitze, die als erstes in die Fuge einzudringen hat, sichtbar ist. Auf diese Weise wird die exakte Positionierung der Sonde relativ zur zu vermessenden Fuge vereinfacht.

Mit Hilfe der beiliegenden Figuren wird nachfolgend ein Ausführungsbeispiels der vorliegenden Erfindung näher erläutert. Es zeigt:
- Figur 1 -: eine Vorrichtung gemäß einem ersten Ausführungsbeispiel in einer Seitenansicht und
- Figur 2 -: die Vorrichtung aus Figur 1 in einer isometrischen Ansicht.

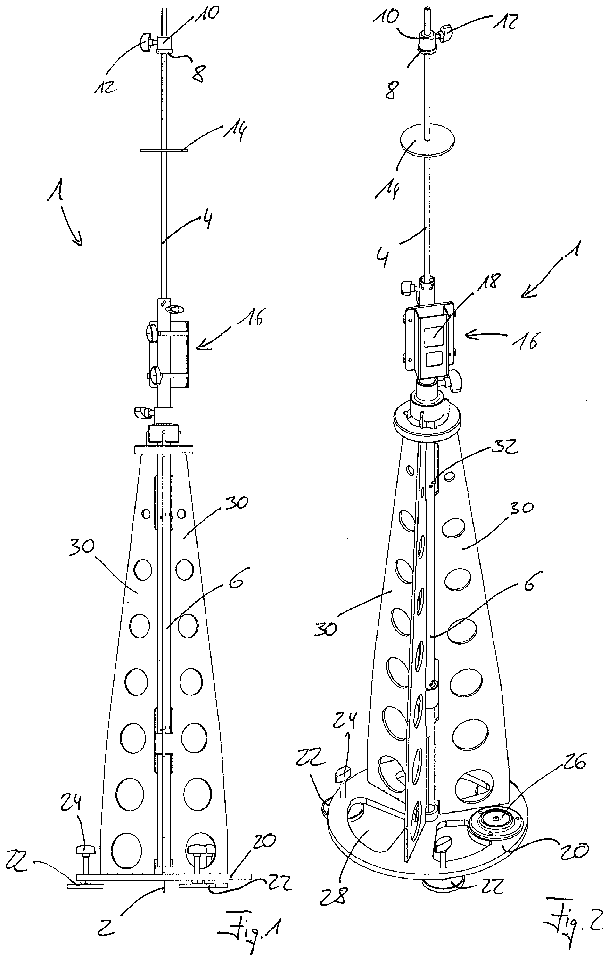

Figur 1 zeigt eine Vorrichtung 1 gemäß einem ersten Ausführungsbeispiel. Sie verfügt über ein Eindringelement 2, das in das Fugenmaterial einer nicht dargestellten Fuge eindringen kann. Das Eindringelement 2 ist an einem Kraftübertragungselement 4 angeordnet, das in einer Führung 6 positioniert ist, die im gezeigten Ausführungsbeispiel als Hohlrohr ausgebildet ist. Das Kraftübertragungselement 4 in Form einer Stange verläuft durch die Führung 6 hindurch und ist an seinem unteren Ende mit dem Eindringelement 2 vorzugsweis lösbar verbunden.

Im oberen Bereich des Kraftübertragungselementes 4 befindet sich ein Gewichtselement 8, das entlang des Kraftübertragungselementes 4 bis zu einem Anschlag 10 verschiebbar ausgebildet ist. Im gezeigten Ausführungsbeispiel ist das Gewichtselement 8 entlang des Kraftübertragungselementes 4 nach oben verschoben. Der Anschlag 10 verfügt über ein Schraubelement 12, mit dem er am Kraftübertragungselement 4 befestigt werden kann. Wird das Schraubelement 12 gelöst, kann der Anschlag 10 entlang des Kraftübertragungselementes 4 verschoben werden.

Im Betrieb der Vorrichtung 1 wird das Gewichtselement 8 in die in den Figuren 1 und 2 gezeigte Position verschoben. Anschließend wird das Element 8 losgelassen und bewegt sich entlang des Kraftübertragungselementes 4 nach unten und trifft auf eine Platte 14, die am Kraftübertragungselement 4 befestigt ist. Das Gewichtselement 8 überträgt folglich einen Kraftstoß auf die Platte 14 und damit auf das Kraftübertragungselement 4 und schlussendlich auf das Eindringelement 2.

Die in den Figuren 1 und 2 gezeigte Vorrichtung 1 verfügt zudem über eine Messeinrichtung 16, die eine Anzeigeeinrichtung 18 aufweist. Die Messvorrichtung 16, die als elektronische Messvorrichtung 16 ausgebildet ist, ist an der Führung 6 befestigt und verfügt über einen nicht dargestellten Laser, der eingerichtet ist, elektronmagnetische Strahlung nach oben auf die Platte 14 auszusenden. Die Messeinrichtung 16 ist in der Lage, den Abstand der Messeinrichtung 16 zu der Platte 14 zu bestimmen. Wird nun durch das Gewichtselement 8 ein Kraftstoß auf die Platte 14 und damit auch auf das Kraftübertragungselement 4 und das Eindringelement 2 ausgeübt, bewegen sich diese Bauteile nach unten, so dass im gezeigten Ausführungsbeispiel der Abstand zwischen der Platte 14 und der Messeinrichtung 16 reduziert wird. Da die Messeinrichtung 16 den Abstand zur Platte 14 misst, wird diese Änderung registriert und auf der Anzeigeeinrichtung 18 angezeigt. Alternativ oder zusätzlich dazu verfügt die Messeinrichtung 16 über einen elektronischen Datenspeicher, in den die gemessenen Daten gespeichert werden können.

Die in den Figuren 1 und 2 dargestellte Vorrichtung 1 verfügt über eine Grundplatte 20, die durch drei Stützelemente 22 auf dem Boden aufsetzbar ist. Durch Verstelleinrichtungen 24 sind die Stützelemente in ihrer wirksamen Länge verstellbar, so dass ein Winkel, den die Grundplatte 20 und damit auch das Kraftübertragungselement 4 und das Eindringelement 2 relativ zum Boden einnehmen, einstellbar ist. An der Grundplatte 20 ist zudem eine Wasserwaage 26 (die Libelle) angeordnet, durch die festgestellt werden kann, wann die Grundplatte 20 exakt horizontal und damit das Kraftübertragungselement 4 und das Eindringelement 2 exakt vertikal, also der Schwerkraft folgend ausgerichtet ist.

In der Grundplatte 20 befinden sich Öffnungen 28, durch die beim Aufstellen und Positionieren der Vorrichtung 1 das Eindringelement 2 sichtbar ist. Auf diese Weise ist eine exakte Ausrichtung besonders einfach möglich. Über drei Rippen 30 wird der Aufbau stabilisiert. Im oberen Bereich dieser Rippen 30 befindet sich an der Führung 6 eine Feststellvorrichtung 32, die im gezeigten Ausführungsbeispiel als Zylinderstift, der durch die Führung 6 hindurchgeschoben werden kann, ausgebildet ist. Mit der Feststellvorrichtung 32 lässt sich das Kraftübertragungselement 4 in der Führung 6 fixieren. Dies ist insbesondere für den Transport der Vorrichtung von Vorteil.

In besonders vorteilhaften Ausgestaltungen sind das Gewichtselement 8 und / oder das Eindringelement 2 austauschbar, um unterschiedlichen Bodenbeschaffenheiten, oder sonstigen Anforderungen gerecht werden zu können.

### Bezugszeichenlisten

- 1: Vorrichtung
- 2: Eindringelement
- 4: Kraftübertragungselement
- 6: Führung
- 8: Gewichtselement
- 10: Anschlag
- 12: Schraubelement
- 14: Platte
- 16: Messeinrichtung
- 18: Anzeigeeinrichtung
- 20: Grundplatte
- 22: Stützelement
- 24: Verstelleinrichtung
- 26: Wasserwaage (Libelle)
- 28: Öffnung
- 30: Rippe
- 32: Feststellvorrichtung

## Patentansprüche

1. Verfahren zum Bestimmen der Lagerungsdichte von ungebundenen Fugenmaterialien eines Bodenbelags mittels einer Vorrichtung (1) zum Bestimmen der Lagerungsdichte von ungebundenen Fugenmaterialien eines Bodenbelages, wobei die Vorrichtung
- ein Eindringelement (2) zum Eindringen in das Fugenmaterial,
- eine Kraftaufbringeinrichtung und
- eine Messeinrichtung (16) aufweist,
wobei die Kraftaufbringeinrichtung derart ausgebildet ist, dass ein Kraftstoß mit vorbestimmter Kraft in einer vorbestimmten Richtung auf das Eindringelement (2) ausübbar ist und
wobei die Messeinrichtung (16) eingerichtet ist zum Messen einer Strecke, um die sich das Eindringelement (2) durch einen Kraftstoß bewegt hat, der auf das Eindringelement (2) mittels der Kraftaufbringeinrichtung aufgebracht wurde, wobei das Verfahren die folgenden Schritte aufweist:
a) Positionieren der Vorrichtung (1) über einer Fuge des Bodenbelages, in der die Lagerungsdichte des in der Fuge enthaltenen Fugenmaterials bestimmt werden soll,
b) Aufsetzen des Eindringelementes (2) auf die Fuge,
c) Ausüben mehrerer Kraftstöße auf das Eindringelement (2) mittels der Kraftaufbringeinrichtung und
d) Bestimmen der Strecke, um die sich das Eindringelement (2) aufgrund jedes der Kraftstöße bewegt hat mittels der Messeinrichtung (16).

2. Verfahren nach Anspruch 1, **dadurch gekennzeichnet, dass** die Messeinrichtung (16) eine Anzeigeeinrichtung (18), insbesondere eine Skala und/oder ein Display, aufweist.

3. Verfahren nach Anspruch 1 oder 2, **dadurch gekennzeichnet, dass** die Messeinrichtung (16) eine elektronische Messeinrichtung (16) zum Messen der Strecke aufweist.

4. Verfahren nach einem der vorstehenden Ansprüche, **dadurch gekennzeichnet, dass** das Eindringelement (2) an einem Kraftübertragungselement (4) angeordnet ist, auf das durch die Kraftaufbringeinrichtung der Kraftstoß ausübbar ist und das relativ zu der Messeinrichtung (16) bewegbar ist.

5. Verfahren nach Anspruch 4, **dadurch gekennzeichnet, dass** das Kraftübertragungselement (4) in einer Führung (6) gelagert und relativ zu der Führung (6) fixierbar ist.

6. Verfahren nach einem der vorstehenden Ansprüche, **dadurch gekennzeichnet, dass** die Kraftaufbringeinrichtung wenigstens ein Gewichtselement (8) aufweist, das entlang einer Führung (4) bis zu einem Anschlag (10) verschiebbar ist.

7. Verfahren nach Anspruch 6, **dadurch gekennzeichnet, dass** das wenigstens eine Gewichtselement (8) austauschbar und/oder der Anschlag (10) verschiebbar ist.

8. Verfahren nach einem der vorstehenden Ansprüche, **dadurch gekennzeichnet, dass** das Gewichtselement (8) durch ein Federelement federbelastet ist.

9. Verfahren nach einem der vorstehenden Ansprüche, **dadurch gekennzeichnet, dass** die Vorrichtung (1) wenigstens drei Stützelemente (22) zum Aufsetzen auf dem Bodenbelag aufweist, von denen wenigstens eines, vorzugsweise alle, in seiner wirksamen Länge verstellbar ist.

## Claims

1. A method for determining the bulk density of loose jointing materials of a flooring by means of a device (1) for determining the bulk density of loose jointing materials of a flooring, wherein the device comprises
- a penetration element (2) for penetrating into the jointing material,
- a force application devices and
- a measurement device (16),
wherein the force application device is designed in such a way that a force impact with a predetermined force in a predetermined direction can be applied to the penetration element (2), and
wherein the measurement device (16) is configured to measure a distance by which the penetration element (2) has moved due to a force impact that has been applied to the penetration element (2) by means of the force application device, wherein the method features the following steps:
a) positioning the device (1) over a joint of the flooring in which the bulk density of the jointing material contained in the joint is to be determined,
b) placing the penetration element (2) on the joint,
c) applying several force impacts onto the penetration element (2) by means of the force application device, and
d) determining the distance by which the penetration element (2) has moved due to each force impact using the measurement device (16).

2. The method according to claim 1, **characterised in that** the measurement device (16) has an indicator (18), in particular a scale and/or.a display.

3. The method according to claim 1 or 2, **characterised in that** the measurement device (16) comprises an electronic measurement device (16) for measuring the distance.

4. The method according to one of the preceding claims, **characterised in that** the penetration element (2) is arranged on a force transmission element (4) to which the force impact can be applied via the force application device and which can be moved relative to the measurement device (16).

5. The method according to claim 4, **characterised in that** the force transmission element (4) is mounted in a guide (6) and can be fixed relative to the guide (6).

6. The method according to one of the preceding claims, **characterised in that** the force application device has at least one weight element (8) that can be displaced along a guide (4) up to an end stop (10).

7. The method according to claim 6, **characterised in that** the at least one weight element (8) can be replaced and/or the end stop (10) can be displaced.

8. The method according to one of the preceding claims, **characterised in that** the weight element (8) is spring-loaded by a spring element.

9. The method according to one of the preceding claims, **characterised in that** the device (1) features at least three support elements (22) for placing on the flooring, of which at least one, but preferably all, can be adjusted in its effective length.

## Revendications

1. Procédé pour déterminer la compacité de matériaux non liés pour joints d'un revêtement de sol au moyen d'un dispositif (1) pour déterminer la compacité de matériaux non liés pour joints d'un revêtement de sol, le dispositif comprenant :
- un élément de pénétration (2) pour pénétrer dans le matériau pour joints,
- un moyen d'application de force, et
- un moyen de mesure (16),
le moyen d'application de force étant réalisé de manière à permettre d'exercer un à-coup d'une force prédéterminée sur l'élément de pénétration (2) dans une direction prédéterminée, et
le moyen de mesure (16) étant conçu pour mesurer un trajet duquel l'élément de pénétration (2) s'est déplacé par un à-coup appliqué à l'élément de pénétration (2) au moyen du dispositif d'application de force,
le procédé comprenant les étapes suivantes consistant à :
a) positionner le dispositif (1) au-dessus d'un joint du revêtement de sol, dans lequel la compacité du matériau pour joints contenu dans ledit joint doit être déterminée,
b) placer l'élément de pénétration (2) sur le joint,
c) exercer plusieurs à-coups sur l'élément de pénétration (2) à l'aide du moyen d'application de force, et
d) déterminer à l'aide du moyen de mesure (16) le trajet duquel l'élément de pénétration (2) s'est déplacé en raison de chacun des à-coups.

2. Procédé selon la revendication 1, **caractérisé en ce que** le moyen de mesure (16) comprend un moyen d'affichage (18), en particulier une échelle et/ou un écran d'affichage.

3. Procédé selon la revendication 1 ou 2, **caractérisé en ce que** le moyen de mesure (16) comprend un moyen de mesure électronique (16) pour mesurer le trajet.

4. Procédé selon l'une des revendications précédentes, **caractérisé en ce que** l'élément de pénétration (2) est disposé sur un élément de transmission de force (4) sur lequel l'à-coup peut être exercé par le moyen d'application de force et qui est mobile par rapport au moyen de mesure (16).

5. Procédé selon la revendication 4, **caractérisé en ce que** l'élément de transmission de force (4) est monté dans un guidage (6) et peut être fixé par rapport au guidage (6).

6. Procédé selon l'une des revendications précédentes, **caractérisé en ce que** le moyen d'application de force comprend au moins un élément de poids (8) qui est déplaçable le long d'un guidage (4) jusqu'à une butée (10).

7. Procédé selon la revendication 6, **caractérisé en ce que** ledit au moins un élément de poids (8) est interchangeable et/ou la butée (10) est déplaçable.

8. Procédé selon l'une des revendications précédentes, **caractérisé en ce que** l'élément de poids (8) est chargé élastiquement par un élément ressort.

9. Procédé selon l'une des revendications précédentes, **caractérisé en ce que** le dispositif (1) comprend au moins trois éléments d'appui (22) pour reposer sur le revêtement de sol, dont au moins un, de préférence tous, est réglable dans sa longueur effective.
